# EUROPÄISCHE PATENTSCHRIFT

(11) **EP 3 773 326 B1**
(45) Veröffentlichungstag und Bekanntmachung des Hinweises auf die Patenterteilung: **04.05.2022**
(21) Anmeldenummer: 19752075.2
(22) Anmeldetag: 10.07.2019
(51) Int. Cl.: A61C 17/22

(54) **VORRICHTUNG ZUM REINIGEN VON ZÄHNEN**
DEVICE FOR CLEANING TEETH
DISPOSITIF DE NETTOYAGE DE DENTS

(30) Priorität: 13.07.2018 DE 202018003268 U
(43) Veröffentlichungstag der Anmeldung: 17.02.2021
(73) Patentinhaber: Ehmann & Partner GmbH, 74831 Gundelsheim (DE)
(72) Erfinder: ERLEWEIN, Marco, 74831 Gundelsheim (DE); HARBARTH, Klaus, 74831 Gundelsheim (DE)
(74) Vertreter: Schmid, Barbara
(86) Internationale Anmeldenummer: PCT/DE2019/000182
(87) Internationale Veröffentlichungsnummer: WO 2020/011296

(56) Entgegenhaltungen:
- WO-A1-2010/145781
- DE-U1- 20 309 088
- US-A1- 2012 189 976
- US-A1- 2018 184 795

## Beschreibung

### TECHNISCHES GEBIET

Die Erfindung betrifft eine Vorrichtung zum Reinigen von Zähnen. Die Reinigung der Zähne muss regelmäßig erfolgen, um Zahnkrankheiten wie Karies oder Parodontose vorzubeugen. Vorzugsweise sollte die Reinigung der Zähne mehrmals täglich vorgenommen werden.

### STAND DER TECHNIK

Vorrichtungen zum Reinigen von Zähnen sind bekannt. Weit verbreitet sind manuelle Handzahnbürsten, die unterschiedliche Arten von Borsten aufweisen können. Darüber hinaus gibt es auch elektrische Zahnbürsten, bei denen die Reinigungsborsten durch einen im Griffelement angeordneten motorischen Antrieb in Bewegung, beispielsweise in Rotation oder in Schwingungen, versetzt werden. Sowohl die Handzahnbürsten als auch die elektrischen Zahnbürsten sind jeweils für die Reinigung eines einzelnen Zahnes ausgelegt, so dass die Zahnbürsten nach und nach an dem gesamten Gebiss entlang geführt werden müssen.

Darüber hinaus sind Vorrichtungen zum Reinigen von Zähnen bekannt, die zumindest ein etwa hufeisenförmiges Mundstück aufweisen. Ein solches Mundstück kann über alle Zähne des Unter- oder des Oberkiefers gestülpt werden, so dass alle Zähne des jeweiligen Kiefers gleichzeitig gereinigt werden können.

Eine derartige Vorrichtung ist beispielsweise aus der WO 2018/014061 A1 bekannt. Das Mundstück ist in diesem Fall mit einer Vielzahl an Silikonborsten bestückt, die den kompletten Kiefer reinigen sollen. Unberücksichtigt bleibt dabei, dass jeder Zahn individuell geformt ist. Auch Unterschiede von Ober- oder Unterkiefer, Hinterschnitte am Zahnfleischsaum, Vertiefungen in den Fissuren, Unterschiede in der Zahnbreite und Zahnlänge sowie Zahnfehlstellungen werden bei den im Stand der Technik bekannten Mundstücken nicht berücksichtigt. Dadurch ist eine optimale Zahnreinigung durch diese Mundstücke in der Regel nicht möglich.

Eine weitere Reinigungsvorrichtung mit Mundstück ist aus WO 2010/145781 A1 bekannt.

### DARSTELLUNG DER ERFINDUNG

Ausgehend von diesem vorbekannten Stand der Technik liegt der Erfindung die Aufgabe zugrunde, eine verbesserte Vorrichtung zum Reinigen der Zähne anzugeben, durch die eine optimale Zahnreinigung bei möglichst geringem Putzaufwand möglich ist.

Die erfindungsgemäße Vorrichtung zum Reinigen von Zähnen ist durch die Merkmale des Hauptanspruchs 1 gegeben. Sinnvolle Weiterbildungen der Erfindung sind Gegenstand von sich an diesen Anspruch anschließenden weiteren Ansprüchen.

Die erfindungsgemäße Vorrichtung zum Reinigen von Zähnen besitzt ein Mundstück in Form eines im Wesentlichen hufeisenförmigen Zähnebogens, eine Halteeinheit, sowie einen motorischen Antrieb. Erfindungsgemäß ist der Zähnebogen als geschlossener Hohlkörper ausgebildet. Die den Zähnen zugewandte Seite des Hohlkörpers weist dabei eine Zahnreinigungsfolie auf, die eine individualisierte, der Zahn- und Kieferform angepasste Oberflächenkontur besitzt. Durch den motorischen Antrieb kann die Zahnreinigungsfolie in Schwingungen versetzt werden. Durch die Verwendung eines Schallwellenantriebs als motorischer Antrieb kann die Zahnreinigungsfolie in alle drei Achsen angeregt werden.

In dem erfindungsgemäßen Zähnebogen werden somit nicht länger Borstenbündel zur Zahnreinigung eingesetzt, da sich diese für eine Schwingungsübertragung als unzureichend erwiesen haben.

Bei jeder Art der Zahnreinigung spielen die abrasiven Putzkörper in der Zahnpasta eine entscheidende Rolle. Angeregt durch einen Schallwellenantrieb werden bei der erfindungsgemäßen Vorrichtung Schwingungen von der Zahnreinigungsfolie an die Zahnpasta und ihre Putzkörper übertragen und die Zahnreinigung findet unmittelbar an der Zahnoberfläche statt. Damit können alle Zähne gleichzeitig erreicht werden und der Abtrag von Plaque und Verfärbungen durch die direkte Vibrationsübertragung von der Zahnreinigungsfolie auf die Zähne kann besonders effektiv erfolgen. Darüber hinaus wird auch ein Vordringen in die Approximalräume und andere schlecht zugängliche Bereich ermöglicht.

Im Gegensatz zu den im Stand der Technik bekannten Vorrichtungen zum Reinigen von Zähnen weist die erfindungsgemäße Vorrichtung eine Zahnreinigungsfolie auf, die individuell an die jeweiligen Ober-und/oder Unterkieferzahnreihen angepasst und topographisch vorgeformt ist. Die Zahnreinigungsfolie verläuft dabei in einem Abstand (Offset) von etwa 0,1 Millimeter bis 2 Millimeter zur Zahnoberfläche. Dazu ist es erforderlich, beispielsweise bei einem Zahnarzt einen 3D-Scan der Zähne durchführen zu lassen. Alternativ können die dreidimensionalen Daten der Kiefer und der Biss-Situation analog abgeformt und diese im Anschluss gescannt werden. Auf der Basis dieser 3D-Scans kann die Zahnreinigungsfolie mit dem Abbild der jeweiligen Zahnreihen vorstrukturiert werden. Dies ermöglicht die Anfertigung eines maßgeschneiderten, individualisierten Mundstücks, das eine optimale Zahnreinigung ermöglicht. Die Zahnreinigungsfolie passt sich komplett der dreidimensionalen Topografie der Kiefer- und Zahnform an. Somit können insbesondere auch individuelle Fehlstellungen der Zähne oder auch Zahnlücken problemlos berücksichtigt werden. Auch eine abweichende Anzahl von Zähnen des Unterkiefers im Vergleich zum Oberkiefer kann abgebildet werden.

Dadurch, dass alle Zähne gleichzeitig erfasst und gereinigt werden, kann auch die erforderliche Putzdauer deutlich reduziert werden. Darüber hinaus können Fehler bei der Putztechnik, beispielsweise ein zu hoher Druck auf Zähne und Zahnfleisch oder auch ein falscher Putzwinkel, vermieden werden.

Grundsätzlich kann der geschlossene Hohlkörper mit einer Flüssigkeit oder mit einem Gas gefüllt sein. Bei der Füllung mit einer Flüssigkeit können auch hochviskose Flüssigkeiten wie beispielsweise Öle eingesetzt werden. Die Füllung mit einem Gas kann insbesondere durch eine Füllung mit Luft realisiert werden. Die Verwendung einer Flüssigkeit innerhalb des Hohlkörpers ermöglicht die Einhaltung eines konstanten Anpressdrucks der Zahnreinigungsfolie auf die Zähne. Dies sorgt für ein optimales Putzergebnis.

Es wäre möglich, den Zähnebogen des Mundstücks der erfindungsgemäßen Vorrichtung nur für die Zähne des Oberkiefers oder auch nur für die Zähne des Unterkiefers auszubilden. In diesem Fall wären für die Reinigung aller Zähne insgesamt zwei Vorrichtungen erforderlich; die Reinigung der Zähne des Oberkiefers und die Reinigung der Zähne des Unterkiefers würde nacheinander erfolgen. Eine solche Ausführungsform kann vorteilhaft sein, wenn nur bei den Zähnen eines Kiefers in kürzerer Zeit größere Änderungen zu erwarten sind, so dass relativ schnell hintereinander neue 3D-Scans erforderlich sind und damit auch neue Zähnebögen angefertigt werden müssen. Dies kann beispielsweise bei der Korrektur einer Zahnfehlstellung durch eine Zahnspange gegeben sein, wenn lediglich die Zähne eines Kiefers durch eine Zahnspange korrigiert werden müssen.

In einer besonders bevorzugten Ausführungsform kann der Hohlkörper des Zähnebogens eine erste Zahnreinigungsfolie für den Oberkiefer und eine zweite Zahnreinigungsfolie für den Unterkiefer aufweisen, die jeweils eine individualisierte, der Zahn- und Kieferform angepasste Oberflächenkontur aufweisen. Auf diese Weise ist eine gleichzeitige Reinigung der Zähne des Ober- und des Unterkiefers möglich, so dass der Zeitaufwand für das Putzen der Zähne minimiert werden kann. Die beiden Zahnreinigungsfolien für den Oberkiefer und für den Unterkiefer können dabei vorzugsweise aus identischem Material bestehen.

Vorzugsweise kann das Starten des Reinigungsvorgangs nicht wie üblich durch einen Knopf per Fingerdruck erfolgen. Vielmehr kann eine automatische Aktivierung über die Mundbewegung erfolgen. Dazu kann der Zähnebogen einen Drucksensor zum An- und Ausschalten des motorischen Antriebs aufweisen. Dieser Drucksensor kann vorzugsweise im Bereich der vorderen Schneidezähne angeordnet sein, da die Schneidezähne keine Kaufläche aufweisen. Der Drucksensor würde daher die zur Verfügung stehende Reinigungsfläche nicht verkleinern. Ein solcher Drucksensor kann unter dem Druck der Frontzähne nachgeben und einen darunter liegenden Sensor betätigen. Vorzugsweise kann zum Starten des motorischen Antriebs ein bestimmter Minimaldruck - beispielsweise ein Druck von 100 Gramm pro Quadratzentimeter - erforderlich sein. Durch eine sensitive Andruckkontrolle kann bei der Überschreitung eines Schwellenwertes - beispielsweise eines Drucks von 250 Gramm pro Quadratzentimeter - eine optische oder akustische Warnung des Benutzers erfolgen und/oder die Schwingung des Motors verändert oder sogar gestoppt werden.

Zur Reinigung der Zähne kann beispielsweise eine Zahnreinigungsfolie eingesetzt werden, die mit dem dreidimensionalen Profil der individuellen Zahnreihen durch Umformen mittels Tiefziehen oder Heißprägen vorstrukturiert wird. Alternativ dazu kann die Zahnreinigungsfolie mittels Tiefziehen, Heißprägen, Tauchen, Gießen, durch 3D-Druck-Verfahren oder durch Spritzverfahren geformt werden. Durch den Aufbau eines Anpressdrucks wird die Zahnstruktur von der Zahnreinigungsfolie optimal umhüllt. Dadurch kann eine maximale Kontaktfläche zwischen der Zahnreinigungsfolie als Zahnreinigungsmedium und den Zähnen hergestellt werden. Alternativ dazu kann die Zahnreinigungsfolie einen Versatz (Offset) zur Zahnoberfläche aufweisen. Ein solcher Versatz kann insbesondere zwischen 0,01 Millimeter und 2 Millimeter betragen.

Da die Zahnreinigungsfolie in unmittelbarem Kontakt zur Schleimhaut der Mundhöhle steht, darf diese nicht toxisch sein. Darüber hinaus sollte die Zahnreinigungsfolie lebensmittelecht (biokompatibel) und latexfrei sein. Um die Schwingungsenergie optimal an die Zahnoberfläche zu übertragen und eine hinreichende Entfernung des Biofilms von den Zähnen zu ermöglichen, sollte die Zahnreinigungsfolie darüber hinaus eine gewisse Steifigkeit aufweisen. Gleichzeitig sollte das Folienmaterial weich genug sein, um das Zahnfleisch nicht zu verletzen. Insbesondere Zahnreinigungsfolien aus Silikon haben sich in diesem Zusammenhang als besonders geeignet herausgestellt. Auch Zahnreinigungsfolien aus thermoplastischem Polyurethan oder anderen elastischen Materialien sind denkbar. Eine Kombination mehrerer Materialien kann die Graduierung der Zahnreinigungsfolie und damit deren Effektivität zusätzlich erhöhen.

Der motorische Antrieb kann insbesondere innerhalb der Halteeinheit angeordnet sein, was die Handhabung der Vorrichtung vereinfacht. In diesem Fall kann eine lösbare Befestigung des Mundstücks an der Halteeinheit einige Vorteile bezüglich der Reinigungsmöglichkeiten des Mundstücks mit sich bringen. Darüber hinaus kann das Mundstück auf diese Weise regelmäßig ausgetauscht und ersetzt werden, ohne die Halteeinheit mit austauschen zu müssen. Alternativ dazu kann die Halteeinheit dauerhaft mit dem Mundstück verbunden sein. Der motorische Antrieb kann in diesem Fall vorzugsweise innen in die Halteeinheit eingeschoben und damit an dieser befestigt werden. Auch hier ist ein Austausch des Mundstücks mit Halteeinheit möglich, ohne den motorischen Antrieb zwingend mit austauschen zu müssen.

Um die Ergonomie und den Tragekomfort möglichst positiv zu gestalten, ist eine möglichst kompakte Dimensionierung des Zähnebogens und damit auch des gesamten Mundstücks erforderlich. Daher sollte das Mundstück aus einem funktional gradierten Material bestehen und vorzugsweise mittels eines 3D-Druck-Verfahrens herstellbar sein.

Der motorische Antrieb kann vorzugsweise einen Schallerzeuger aufweisen. Der Schall kann dabei insbesondere elektromagnetisch, pneumatisch oder über ein Piezoelement erzeugt werden.

Vorzugsweise kann der Zähnebogen individualisierte Kontaktpunkte aufweisen, um das Mundstück optimal auf den beiden Kiefern positionieren zu können. Da die Zahnreinigungsfolien für den Oberkiefer und den Unterkiefer verhältnismäßig dünn und damit flexibel sind, wird durch die Kontaktpunkte eine falsche Positionierung des Ober- und Unterkiefers des Benutzers im Mundstück verhindert. Erst wenn die Zahnreinigungsfolien durch die Zähne des Benutzers mit einem ausreichenden Druck auf die Kontaktpunkte gedrückt werden, ist eine korrekte Positionierung sichergestellt und der motorische Antrieb kann gestartet werden. Somit kann auch erst dann der Reinigungsvorgang gestartet werden. Da im Bereich der Kontaktpunkte nur eine eingeschränkte Schwingung der Zahnreinigungsfolien möglich ist, sollten die Kontaktpunkte möglichst klein gehalten werden und an solchen Stellen angeordnet sein, die beim Reinigungsvorgang möglichst unkritisch sind. Vorzugsweise können die Kontaktpunkte im Bereich der Frontzähne und/Oder an den distalen Randleisten der jeweils letzten Zähne (Backenzähne oder Weisheitszähne) angeordnet sein.

Mit der erfindungsgemäßen Vorrichtung kann grundsätzlich eine Reinigung der Zähne eines Menschen oder auch eine Reinigung der Zähne eines Tieres - beispielsweise eines Hundes, einer Katze oder eines Pferdes - möglich sein. Die erfindungsgemäße Vorrichtung kann bei Kindern und bei Erwachsenen eingesetzt werden. Dabei sollte in regelmäßigen Abständen ein neuer 3D-Scan der Zähne angefertigt werden, um Änderungen der Zahnstruktur umsetzen zu können. Dies kann insbesondere in der Übergangszeit zwischen dem Milchgebiss und dem Erwachsenengebiss häufiger der Fall sein.

Weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivische Ansicht der erfindungsgemäßen Vorrichtung zum Reinigen von Zähnen,
- Fig. 2: eine Draufsicht auf die Vorrichtung gemäß Fig. 1 und
- Fig. 3: einen Querschnitt durch den Zähnebogen der Vorrichtung gemäß Fig. 1 und 2 im Bereich der Backenzähne.

### WEGE ZUM AUSFÜHREN DER ERFINDUNG

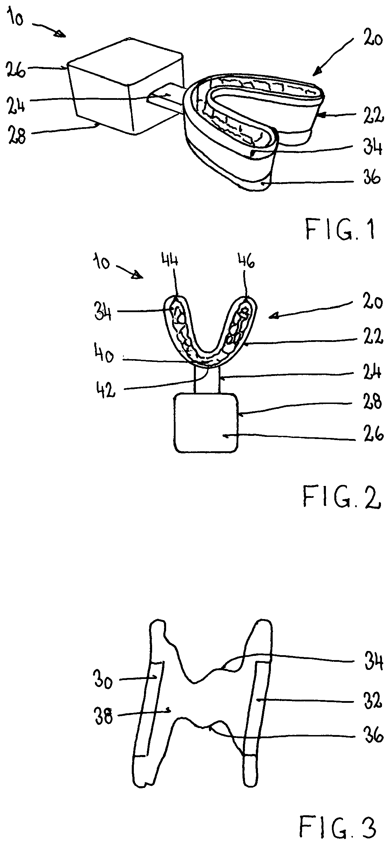

Die erfindungsgemäße Vorrichtung 10 zum Reinigen von Zähnen ist in den Fig. 1 bis 3 dargestellt. Die Vorrichtung 10 besitzt ein Mundstück 20 in Form eines etwa hufeisenförmigen Zähnebogens 22. Das Mundstück 20 ist über ein Verbindungsteil 24 mit einer Halteeinheit 26 verbunden. Um das Mundstück 20 auswechseln zu können, ist das Mundstück 20 im vorliegenden Beispielsfall lösbar an dem Verbindungsteil 24 befestigt. Die Halteeinheit 26 weist einen integrierten motorischen Antrieb 28 auf.

Der Zähnebogen 22 ist als geschlossener Hohlkörper ausgebildet (siehe Fig. 3). Die Seitenränder 30, 32 des Zähnebogens 22 sind jeweils aus einem steifen Kunststoffmaterial gebildet. Die den Zähnen zugewandten Ober- und Unterseiten des Zähnebogens 22 weisen dagegen jeweils eine Zahnreinigungsfolie 34, 36 auf. Die Zahnreinigungsfolien 34, 36 weisen jeweils eine individualisierte, der Zahn- und Kieferform des Benutzers angepasste Oberflächenkontur auf. Dabei ist die Zahnreinigungsfolie 34 im vorliegenden Beispielsfall an die Zahn- und Kieferform des Oberkiefers angepasst, während die Zahnreinigungsfolie 36 an die Zahn- und Kieferform des Unterkiefers angepasst ist. Die einzelnen Vertiefungen des Zähnebogens 22 für die Zähne des Unter-und des Oberkiefers weisen somit nicht lediglich eine U- oder V-förmige Kontur auf. Vielmehr sind die Vertiefungen individuell angepasst, so dass der Zähnebogen 22 nur für einen Benutzer verwendbar ist. Dadurch kann eine optimale Anpassung des Zähnebogens 22 und damit auch ein optimales Reinigungsergebnis erzielt werden.

Die Zahnreinigungsfolien 34, 36 werden jeweils ein Stück weit um die Seitenränder 30, 32 des Zähnebogens 22 herumgeführt und an der Außenseite der Seitenränder 30, 32 befestigt. Im Innenraum 38 des Zähnebogens 22 befindet sich im vorliegenden Beispielsfall ein gasförmiges Medium.

Beim bestimmungsgemäßen Gebrauch wird der Zähnebogen 22 in den Mund des Benutzers geschoben und der Mund anschließend geschlossen. Dabei kommen die Lippen des Benutzers auf dem Verbindungsteil 24 zum Liegen. Die Zähne des Benutzer befinden sich in den Vertiefungen des Zähnebogens 22 und werden von der Zahnreinigungsfolie 34, 36 umschlossen. Dabei kann die Zahnreinigungsfolie 34, 36 direkt an den Zähnen des Benutzers anliegen, oder auch einen geringen Abstand zu den Zähnen des Benutzers aufweisen.

Die Halteeinheit 26 bleibt außerhalb des Mundes und kann vom Benutzer selbst oder von einem Dritten gehalten werden. Durch den motorischen Antrieb 28 können die Zahnreinigungsfolien 34, 36 in Schwingungen versetzt werden.

Im vorliegenden Beispielsfall weist die Halteeinheit 26 keinen Bedienknopf zum An- und Ausschalten des motorischen Antriebs 28 auf. Vielmehr befindet sich im Bereich der vorderen Schneidezähne ein Drucksensor 40, durch den der motorische Antrieb 28 an- und ausgeschaltet werden kann. Ist der Zähnebogen 22 korrekt im Mund eingesetzt und der Kiefer geschlossen, wird ein vorher definierter Schwellenwert an dem Drucksensor 40 überschritten und der motorische Antrieb 28 wird angeschaltet. Wird der Mund dagegen wieder geöffnet, schaltet sich der motorische Antrieb 28 automatisch ab. Wird dagegen ein bestimmter Schwellenwert an dem Drucksensor 40 überschritten, kann ebenfalls ein automatisches Abschalten des motorischen Antriebs 28 erfolgen.

Um die korrekte Positionierung des Zähnebogens 22 im Mund überprüfen zu können, weist der Zähnebogen 22 im vorliegenden Beispielsfall insgesamt drei Kontaktpunkte 42, 44, 46 auf. Nur wenn die Zähne des Benutzers an der Stelle der Kontaktpunkt 42, 44, 46 über die Zahnreinigungsfolien 34, 36 mit dem Zähnebogen in Kontakt sind, umschließt die Zahnreinigungsfolie 34, 36 den jeweiligen Kiefer korrekt und der Reinigungsvorgang kann beginnen. Im vorliegenden Beispielsfall ist der Kontaktpunkt 42 im Bereich der vorderen Schneidezähne und damit auch im Bereich des Drucksensors 40 angeordnet. Die beiden hinteren Kontaktpunkte 44, 46 sind beidseitig jeweils im Bereich des hintersten Zahns, also im Bereich des hintersten Backenzahns oder Weisheitszahns, angeordnet.

## Patentansprüche

1. Vorrichtung (10) zum Reinigen von Zähnen,
- mit einem Mundstück (20) in Form eines im Wesentlichen hufeisenförmigen Zähnebogens (22),
- mit einer Halteeinheit (26),
- mit einem motorischen Antrieb (28),
- **dadurch gekennzeichnet, dass**
- der Zähnebogen (22) als geschlossener Hohlkörper ausgebildet ist,
- die den Zähnen zugewandte Seite des Hohlkörpers (22) eine Zahnreinigungsfolie (34, 36) aufweist,
- die Zahnreinigungsfolie (34, 36) eine individualisierte, der Zahn- und Kieferform angepasste Oberflächenkontur besitzt
- die Zahnreinigungsfolie (34, 36) durch den motorischen Antrieb (28) in Schwingungen versetzbar ist.

2. Vorrichtung nach Anspruch 1,
- **dadurch gekennzeichnet, dass**
- der geschlossene Hohlkörper (22) mit einer Flüssigkeit und/oder einem Gas gefüllt ist.

3. Vorrichtung nach Anspruch 1 oder 2,
- **dadurch gekennzeichnet, dass**
- der Hohlkörper (22) eine erste Zahnreinigungsfolie (34) für den Oberkiefer und eine zweite Zahnreinigungsfolie (36) für den Unterkiefer aufweist,
- die beiden Zahnreinigungsfolien (34, 36) jeweils eine individualisierte, der Zahn- und Kieferform angepasste Oberflächenkontur aufweisen.

4. Vorrichtung nach Anspruch 3
- **dadurch gekennzeichnet, dass**
- die beiden Zahnreinigungsfolien (34, 36) für den Oberkiefer und für den Unterkiefer aus einem identischen Material bestehen.

5. Vorrichtung nach Anspruch 3 oder 4,
- **dadurch gekennzeichnet, dass**
- der Zähnebogen (22) einen Drucksensor (40) zum An- und Ausschalten des motorischen Antriebs (28) aufweist.

6. Vorrichtung nach Anspruch 5,
- **dadurch gekennzeichnet, dass**
- der Drucksensor (40) im Bereich der vorderen Schneidezähne angeordnet ist.

7. Vorrichtung nach einem der vorstehenden Ansprüche,
- **dadurch gekennzeichnet, dass**
- die Zahnreinigungsfolie (34, 36) umformbar, insbesondere durch Tiefziehen oder durch Heißprägen umformbar ist.

8. Vorrichtung nach einem der der Ansprüche 1 bis 6,
- **dadurch gekennzeichnet, dass**
- die Zahnreinigungsfolie (34, 36) durch Tiefziehen, Heißprägen, Tauchen, Gießen, 3D-Druck-Verfahren oder Spritzen herstellbar ist.

9. Vorrichtung nach einem der vorstehenden Ansprüche,
- **dadurch gekennzeichnet, dass**
- die Zahnreinigungsfolie (34, 36) latexfrei ist.

10. Vorrichtung nach einem der vorstehenden Ansprüche,
- **dadurch gekennzeichnet, dass**
- die Zahnreinigungsfolie (34, 36) aus biokompatiblem Silikon besteht.

11. Vorrichtung nach einem der vorstehenden Ansprüche,
- **dadurch gekennzeichnet, dass**
- die Zahnreinigungsfolie (34, 36) aus thermoplastischem Polyurethan oder aus einem Verbund aus thermoplastischem Polyurethan und Silikon besteht.

12. Vorrichtung nach einem der vorstehenden Ansprüche,
- **dadurch gekennzeichnet, dass**
- das Mundstück (20) lösbar an der Halteeinheit (26) befestigt ist.

13. Vorrichtung nach einem der vorstehenden Ansprüche,
- **dadurch gekennzeichnet, dass**
- der motorische Antrieb (28) innerhalb der Halteeinheit (26) angeordnet ist.

14. Vorrichtung nach einem der vorstehenden Ansprüche,
- **dadurch gekennzeichnet, dass**
- der Zähnebogen (22) individualisierte Kontaktpunkte (42, 44, 46) aufweist.

15. Vorrichtung nach Anspruch 14,
- **dadurch gekennzeichnet, dass**
- die individualisierten Kontaktpunkte (42, 44, 46) im Bereich der Frontzähne und/oder an den distalen Randleisten der jeweils hintersten Zähne angeordnet sind.

## Claims

1. A device (10) for cleaning teeth,
- having a mouthpiece (20) in the form of a substantially horseshoe-shaped dental arch (22),
- having a retaining unit (26),
- having a motor drive (28),
- **characterized in that**
- the dental arch (22) is designed as a closed hollow body,
- the side of the hollow body (22) that faces the teeth has a tooth-cleaning film (34, 36),
- the tooth-cleaning film (34, 36) has an individualized surface contour matched to the tooth shape and jaw shape,
- the tooth-cleaning film (34, 36) can be set into oscillation by the motor drive (28).

2. The device as claimed in claim 1,
- **characterized in that**
- the closed hollow body (22) is filled with a liquid and/or a gas.

3. The device as claimed in claim 1 or 2,
- **characterized in that**
- the hollow body (22) has a first tooth-cleaning film (34) for the upper jaw and a second tooth-cleaning film (36) for the lower jaw,
- the two tooth-cleaning films (34, 36) have respectively an individualized surface contour matched to the tooth shape and jaw shape.

4. The device as claimed in claim 3,
- **characterized in that**
- the two tooth-cleaning films (34, 36) for the upper jaw and for the lower jaw consist of an identical material.

5. The device as claimed in claim 3 or 4,
- **characterized in that**
- the dental arch (22) has a pressure sensor (40) for switching on and switching off the motor drive (28).

6. The device as claimed in claim 5,
- **characterized in that**
- the pressure sensor (40) is arranged in the region of the front incisors.

7. The device as claimed in one of the preceding claims,
- **characterized in that**
- the tooth-cleaning film (34, 36) can be shaped, in particular can be shaped by deep drawing or by hot stamping.

8. The device as claimed in one of claims 1 to 6,
- **characterized in that**
- the tooth-cleaning film (34, 36) can be produced by deep drawing, hot stamping, dip molding, casting, 3D-printing methods or injection molding.

9. The device as claimed in one of the preceding claims,
- **characterized in that**
- the tooth-cleaning film (34, 36) is latex-free.

10. The device as claimed in one of the preceding claims,
- **characterized in that**
- the tooth-cleaning film (34, 36) consists of biocompatible silicone.

11. The device as claimed in one of the preceding claims,
- **characterized in that**
- the tooth-cleaning film (34, 36) consists of thermoplastic polyurethane or of a composite of thermoplastic polyurethane and silicone.

12. The device as claimed in one of the preceding claims,
- **characterized in that**
- the mouthpiece (20) is attached releasably to the retaining unit (26).

13. The device as claimed in one of the preceding claims,
- **characterized in that**
- the motor drive (28) is arranged within the retaining unit (26).

14. The device as claimed in one of the preceding claims,
- **characterized in that**
- the dental arch (22) has individualized contact points (42, 44, 46).

15. The device as claimed in claim 14,
- **characterized in that**
- the individualized contact points (42, 44, 46) are arranged in the region of the front teeth and/or at the distal margin strips of the respective rearmost teeth.

## Revendications

1. Dispositif (10) pour le nettoyage des dents,
- comprenant un embout buccal (20) sous la forme d'une arcade dentaire (22) essentiellement en forme de fer à cheval,
- comprenant une unité de maintien (26),
- comprenant un entraînement motorisé (28),
- **caractérisé en ce que**
- l'arcade dentaire (22) est configurée sous la forme d'un corps creux fermé,
- le côté du corps creux (22) tourné vers les dents présente une feuille de nettoyage des dents (34, 36),
- la feuille de nettoyage des dents (34, 36) possède un contour de surface individualisé, adapté à la forme des dents et des mâchoires,
- la feuille de nettoyage des dents (34, 36) peut être mise en vibration par l'entraînement motorisé (28).

2. Dispositif selon la revendication 1,
- **caractérisé en ce que**
- le corps creux fermé (22) est rempli d'un liquide et/ou d'un gaz.

3. Dispositif selon la revendication 1 ou 2,
- **caractérisé en ce que**
- le corps creux (22) présente une première feuille de nettoyage des dents (34) pour la mâchoire supérieure et une deuxième feuille de nettoyage des dents (36) pour la mâchoire inférieure,
- les deux feuilles de nettoyage des dents (34, 36) présentent chacune un contour de surface individualisé, adapté à la forme des dents et des mâchoires.

4. Dispositif selon la revendication 3,
- **caractérisé en ce que**
- les deux feuilles de nettoyage des dents (34, 36) pour la mâchoire supérieure et pour la mâchoire inférieure sont constituées d'un matériau identique.

5. Dispositif selon la revendication 3 ou 4,
- **caractérisé en ce que**
- l'arcade dentaire (22) présente un capteur de pression (40) pour le démarrage et l'arrêt de l'entraînement motorisé (28).

6. Dispositif selon la revendication 5,
- **caractérisé en ce que**
- le capteur de pression (40) est agencé dans la zone des incisives avant.

7. Dispositif selon l'une quelconque des revendications précédentes,
- **caractérisé en ce que**
- la feuille de nettoyage des dents (34, 36) est déformable, notamment déformable par emboutissage ou par estampage à chaud.

8. Dispositif selon l'une quelconque des revendications 1 à 6,
- **caractérisé en ce que**
- la feuille de nettoyage des dents (34, 36) peut être fabriquée par emboutissage, par estampage à chaud, par immersion, par moulage, par un procédé d'impression 3D ou par pulvérisation.

9. Dispositif selon l'une quelconque des revendications précédentes,
- **caractérisé en ce que**
- la feuille de nettoyage des dents (34, 36) est sans latex.

10. Dispositif selon l'une quelconque des revendications précédentes,
- **caractérisé en ce que**
- la feuille de nettoyage des dents (34, 36) est constituée de silicone biocompatible.

11. Dispositif selon l'une quelconque des revendications précédentes,
- **caractérisé en ce que**
- la feuille de nettoyage des dents (34, 36) est constituée de polyuréthane thermoplastique ou d'un composite de polyuréthane thermoplastique et de silicone.

12. Dispositif selon l'une quelconque des revendications précédentes,
- **caractérisé en ce que**
- l'embout buccal (20) est fixé de manière amovible à l'unité de maintien (26).

13. Dispositif selon l'une quelconque des revendications précédentes,
- **caractérisé en ce que**
- l'entraînement motorisé (28) est agencé à l'intérieur de l'unité de maintien (26).

14. Dispositif selon l'une quelconque des revendications précédentes,
- **caractérisé en ce que**
- l'arcade dentaire (22) présente des points de contact individualisés (42, 44, 46).

15. Dispositif selon la revendication 14,
- **caractérisé en ce que**
- les points de contact individualisés (42, 44, 46) sont agencés dans la zone des dents antérieures et/ou sur les rebords distaux des dents les plus postérieures respectives.
